# EUROPEAN PATENT SPECIFICATION

(11) **EP 0 616 958 B1**
(45) Date of publication and mention of the grant of the patent: **03.09.1997**
(21) Application number: 94200802.0
(22) Date of filing: 25.03.1994
(51) Int. Cl.: B65G 1/137

(54) **Method and equipment for the control of the production and for the handling of daily-fresh food products**
Verfahren und Einrichtung zur Produktion und zum Versand von täglich frischen Esswaren
Méthode et dispositif pour commander la production et pour l'expédition de produits comestibles quotidiennement frais

(30) Priority: 26.03.1993 NL 9300552
(43) Date of publication of application: 28.09.1994
(73) Proprietor: Huijbers, Ernestus Johannes Antonius, NL-1054 WH Amsterdam (NL)
(72) Inventor: Huijbers, Ernestus Johannes Antonius, NL-1054 WH Amsterdam (NL)
(74) Representative: Smulders, Theodorus A.H.J., Ir.

(56) References cited:
- EP-A- 0 254 261
- WO-A-87/01102
- DE-A- 2 429 699
- DE-A- 2 502 316
- DE-A- 3 524 344

## Description

The invention relates to a method for the production control and handling of fresh daily food products, such as loaves of bread.

In WO 87/01102 a method for storing and afterwards collecting orders, consisting of products packed in crates and the like is described. According to the known method the crates and the like are stored as partial stacks, after which two or more partial stacks are stacked to form a full stack, which is delivered as such. The idea behind the known method is that the handling of full stacks with a height of the truck in which the stacks have to transported is difficult. Moreover the orders to be delivered are mostly smaller than the number of crates which is present in one stack. As a consequence when loading the truck, the full stacks often have to be destacked, which is laborious and time consuming. According to the known method the crates are now stored in partial stacks which have a height which is smaller than the height of a full stack. In the known method the crates are stored firstly and after storing the orders from the clients are formed during the loading of the truck.

In DE-A-25 02 316 an apparatus is described for unloading first pallets and loading second pallets with products from the unloaded first pallets. The pallets to be loaded each receive a certain number of a certain product which is meant for a certain client. A pallet to be loaded will mostly contain various types of products in varying numbers. The pallets which are unloaded always contain one type of product. With the known apparatus products of one type on a first pallet are distributed over several second pallets whereby the order of the client dictates the number of products which is delivered on each second pallet.

EP-A-0 254 261 relates to a method and an apparatus for merging goods which are stored on a plurality of storage lines. The manner in which the products are merged is controlled by a host computer and a distribution control computer. The host computer prepares a schedule for delivery based on the data of received-orders, etc. and outputs the schedule to the distribution control computer. The distribution control computer determines groups of goods based on the delivery schedule, prepares diverting data and batch picking data which are sent to a sorting system. The sorting systems carries out the filling of the container whereby the larger products are delivered at the bottom of the container and the smaller products at the top of the container. The main object of the known method is to fill a container of a truck as efficient as possible whereby the route of delivery and the size of the products is taken into account.

In the production of fresh daily food products, produced and handled on the day of sale, such as bread, it is very important to minimize intermediate storage of the food products.

Although the invention will be explained below on the basis of bread as a food product, it is clear that the method and the handling equipment to be discussed are also suitable for handling other discrete fresh daily food products to be produced to customers' order.

Since industrial bakeries nowadays are producing many types of bread, and customers, such as shops, buy from an industrial bakery assortments of different composition, a good production and handling control is of essential importance to the industrial bakery. In view of the keen competition in the production of bread, it is necessary, both in the production and in handling, to minimize the number of workers who, moreover, must often work at night.

Besides, in order to prevent stockpiling, the amount of loaves to be produced must be closely adjusted to the demand of the customers. Since this demand may change every day, a demand-controlled production is very important.

Also, intermediate storage of the loaves must be minimized so as to keep the loaves fresh.

In the known method of producing and handling bread in industrial bakeries, in particular handling is still very labour-intensive.

The object of the invention is to provide a method ensuring optimum production and handling control at a minimum of labour force and stockpiling.

To this end, the method is characterized by the features of claim 1.

A unit may be, for instance, a crate filled with loaves of bread. Since in a production group the number of units corresponds to the sum of the numbers of units of that type of food ordered by different customers, no stock of that type of food will be formed after such a production step because each unit is already destined for a customer.

The units are distributed fully automatically by means of the conveyor and without human intervention. This results in a tremendous reduction in labour cost. Moreover, the food is directly assorted in the customer groups without intermediate storage.

In order to make the units fit for conveyance, for instance by truck, without human intervention, the method is characterized according to a further elaboration of the invention by the features of claim 2.

Since the customer groups are placed on the dollies in the order in which they must be delivered, their place in the truck corresponds to the moment they must be unloaded on the rounds of the truck.

The invention also relates to a handling equipment for handling, by using the method according to the invention, fresh daily food products, such as loaves of bread packed in crates, boxes or such standard containers.

To this end, the handling equipment according to the invention is characterized by the features of claim 5.

Such a handling equipment enables automatic distribution of the crates with one type of food, supplied in production groups, over the different customer positions without human intervention. When each customer position is filled with the number of crates ordered by that customer, the customer positions can be automatically emptied by means of the handling equipment by placing the formed stacks on dollies or such trolleys. The control device is generally a computer the memory of which contains the order lists of the different customers. On the basis of these order list data the computer controls the drive means of the belt conveyor system and the pick-up devices.

According to a further elaboration of the invention the handling equipment may be characterized by the features of claim 6.

Such a pick-up device is stable and of simple construction.

In an alternative embodiment of the handling equipment the handling equipment may be characterized by the features of claim 7.

Such a pick-up device may also be stable and of simple construction and has the additional advantage that it requires fewer investments and that in case of a possible change in the arrangement of the lanes of the handling equipment it can be adjusted to the new arrangement of lanes more easily than pick-up devices with a portal construction.

Further elaborations of the method and the handling equipment according to the invention are described in the subclaims.

In explanation of the invention, an exemplary embodiment of the method and the handling equipment will be described with reference to the accompanying drawings in which:
Fig. 1 is a top view of an exemplary embodiment of a handling equipment according to the invention;
Fig. 2 is a perspective view of a lane with a pick-up device having a portal construction; and
Fig. 3 is a perspective view of a lane with a pick-up device having a hinged arm mechanism.

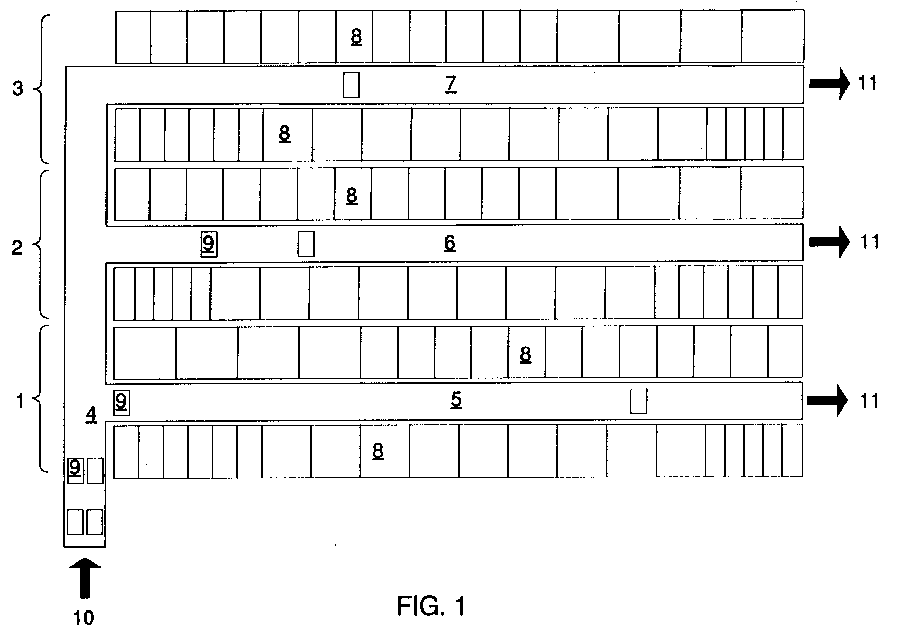

The top view, shown in Fig. 1, of the handling equipment for handling fresh daily produced food products, such as bread, is provided with a conveyor track system 4, 5, 6, 7. In the exemplary embodiment the conveyor track system is provided with a main conveyor track 4 with a supply side 10 and three side conveyor tracks 5, 6, 7 connected with the main conveyor track 4 via conveyor track branches. Each side conveyor track 5, 6, 7 extends in a lane 1, 2, 3. In the exemplary embodiment the side conveyor tracks are bounded on both sides by customer positions 8. A customer position 8 is a number of square meters of floor area reserved for a customer.

The handling equipment further comprises a control device (not shown) and one or a plurality of pick-up devices 12, 13, which, for clearness' sake, are not shown in Fig. 1. The or each pick-up device 12, 13 is arranged to pick up a crate 9 or a stack of crates 9 from the side conveyor tracks 5, 6, 7 and to place these crates 9 on a customer position 8 and vice versa. In general, one pick-up device 12, 13 is provided for each lane 1, 2, 3. It is very favourable when the pick-up devices 12, 13 are also arranged to pick up one crate or a stack of crates 9 from the conveyor track portion 5, 6, 7 extending in a lane and to place this crate or this stack of crates 9 on a dolly (not shown) or such trolley positioned at the exit 11 of the conveyor track portion 5, 6, 7.

The control device is arranged to distribute the crates 9 to be supplied at the supply side 10 over the different customer positions 8 and may be designed, for instance, as a computer in the memory of which the order lists are stored, and which computer is connected with the driving means of the conveyor tracks 4, 5, 6, 7 and the pick-up devices 12, 13 for the control thereof.

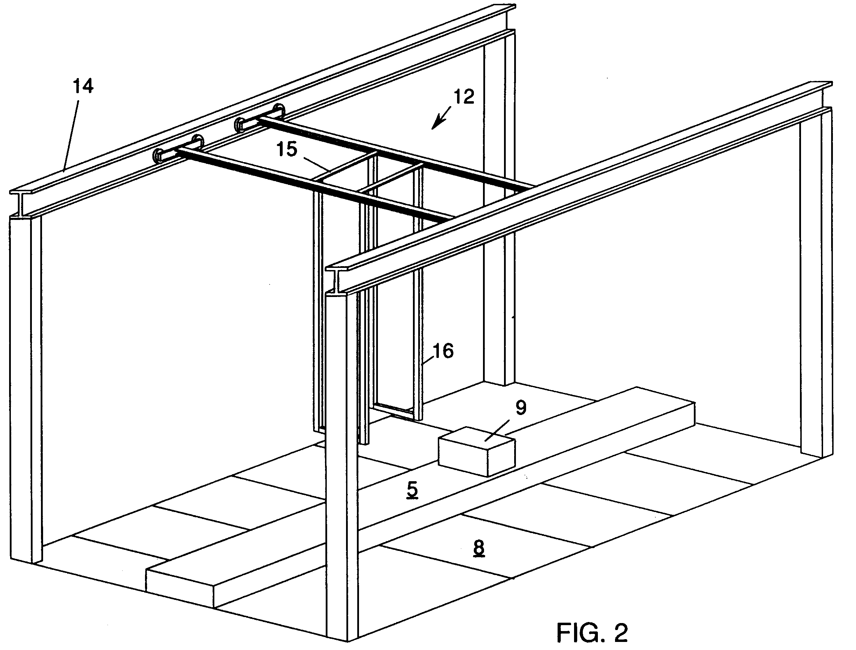

The embodiment, shown in Fig. 2, of a lane 1, 2, 3 of a handling equipment is provided with a pick-up device 12 designed as a portal construction 14 with a crab 15. The crab 15 is controllable so as to be brought above any place in the whole lane area belonging to the relevant pick-up device 12. Further, the crab 15 is provided with gripping arms 16 designed to pick up one crate or a stack of crates 9.

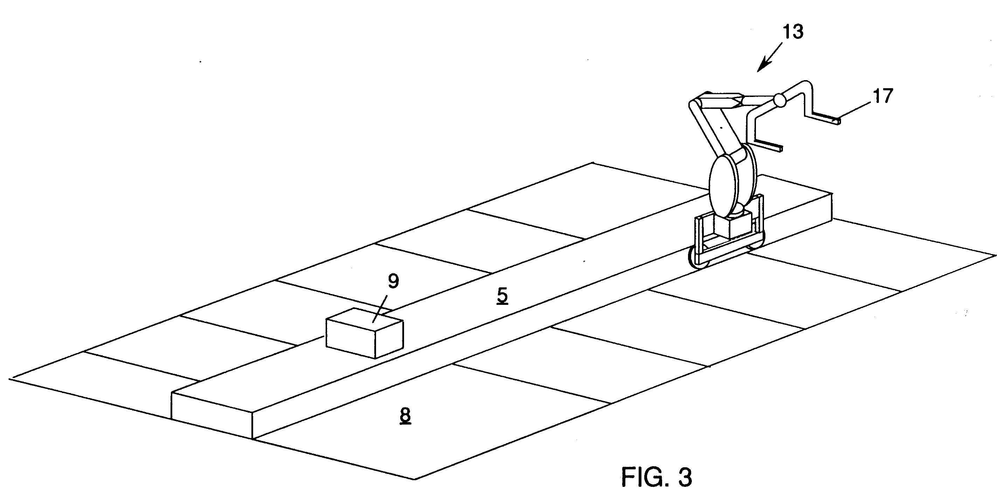

In another embodiment, shown in Fig. 3, the pick-up device 13 may be designed as a hinged arm mechanism 13 with a gripper 17, movably arranged along the conveyor track portion 5, 6, 7 located in a lane 1, 2, 3. In the exemplary embodiment shown, a rail is provided under the conveyor track portion extending in the lane. The hinged arm 13 is controllable so as to be brought above any place in the whole lane area belonging to the relevant pick-up device 13. The gripper 17 is arranged to pick up one crate or a stack of crates.

The fresh daily food products are supplied in crates, boxes or such standard containers 9 to the handling equipment at the supply side 10 of the main conveyor track 4. The supply takes place per production group, composed of a plurality of crates 9 containing a food product of the same type. The number of crates 9 of a production group corresponds to the total number of crates 9 of a particular type of bread ordered by the different customers. After the production group has been supplied in a supply step to the main conveyor track 4, the units or crates 9 from the production group are distributed in a distribution step over the different customer positions 8 via the side conveyor tracks 5, 6, 7 and by means of the pick-up devices 12, 13. The supply step and the distribution step are repeated until all types of food have been distributed over the different customer positions 8. The pick-up devices 12, 13 are preferably so designed that when all the customer groups located at the customer positions 8 substantially contain the required numbers of units of all types of food according to the orders of the customers the pick-up device 12, 13 can pick up the formed stacks of crates 9 from the customer positions 8 and deliver them at delivery points 11 at the ends of the side conveyor tracks 5, 6, 7 by placing the stacks of crates 9 on, e.g., dollies or such trolleys. Preferably, the stacks of crates 9 are delivered to the dollies in a sequence corresponding to the sequence in which the customer groups must be loaded into a truck. This sequence, stored in the memory of the control device, is of course determined by the rounds of the different customers to be made by the truck.

It may happen that the number of units of a production group of a particular type of food is too small to provide all the customer groups with the number of units of food product of that type ordered by the relevant customers. Such a shortage may arise, for instance, from the fact that in the production of, for instance, a particular type of bread too little dough was prepared or from the fact that the dough was not distributed exactly enough over a plurality of balking tins.

In that case the shortage of units in the distribution step is spread over the different customer groups so that each customer who ordered that type of food receives at least a number of units of that type of food.

Preferably, the shortage is spread over those customer groups which must contain the largest number of the type of food which is in short supply. A shortage of one unit per twenty units is in fact less serious than a shortage of one unit per two units.

It is clear that the invention is not restricted to the exemplary embodiment described but that various modifications are possible within the scope of the invention.

## Claims

1. A method for the production control and automatic handling of fresh daily food products, such as loaves of bread, whereby, to form customer groups which, according to the order of a customer, contain a number of units (9) such as crates, boxes or standard containers of different types of food, a number of units (9) of one type of food in one production group is produced in a production step, of which production group the number of units (9) corresponds to the sum of the number of units (9) of that type of food ordered by different customers, each production group of a particular type of food being supplied in a supplying step to a conveyor (4,5,6,7,12,13), the units (9) of a production group being distributed in a distribution step by the conveyor (4,5,6,7,12,13) over different customer groups located at corresponding customer positions (8), and the production step, the supplying step and the distribution step being repeated for each different type of food until all types of food have been distributed over the different customer groups.

2. A method according to claim 1, characterized in that when all the customer groups, according to the orders of the customers, substantially contain the required numbers of all types of food, the conveyor (4,5,6,7,12,13) picks up the formed customer groups in the order in which they must be delivered to the customers and places them on dollies or similar trolleys which are brought into a means of transport.

3. A method according to claim 1 or 2, characterized in that when the number of units (9) of a production group of a particular type of food is too small to provide all the customer groups with the number of units of food product of that type ordered by the relevant customers, the shortage of units (9) is spread over the different customer groups.

4. A method according to claim 3, characterized in that the shortage of units (9) is spread in particular over those customer groups which must contain the largest number of the type of food which is in short supply.

5. A handling equipment for automatic handling units of fresh daily food products, such as loaves of bread packed in units such as crates, boxes or standard containers (9), comprising a conveyor track system (4,5,6,7), such as a belt conveyor or roller conveyor system, provided on a supply side (10) at least one lane (1,2,3) comprising customer positions (8), each customer position (8) comprising a number of square meters of floor area reserved for a customer group of a customer, at least one pick-up device (12,13) extending in a lane (1;2,3) and a control device, arranged to control the conveyor track and the pick-up device in order to perform the method according to one of claims 1-4, the conveyor track system (5,6,7) at least partly extending in the or each lane (1,2,3), provided with the customer positions (8) for storing stacks of crates assorted to customer's order, the or each pick-up device (12, 13) being arranged to pick up a crate or a stack of crates (9) from the conveyor track system (5,6,7) and to form stacks of crates (9) at the customer positions (8) and vice versa, the control device being arranged to distribute the crates (9) to be supplied at the supply side (10) over the different customer positions (8).

6. A handling equipment according to claim 5, characterized in that the pick-up device (12) comprises a portal construction (14) with a crab (15), the crab (15) being controllable so as to be brought above any place in the whole lane area (1,2,3) belonging to the relevant pick-up device (12), and the crab (15) being provided with gripping arms (16) movable up and down, arranged to pick up one crate or a stack of crates (9).

7. A handling equipment according to claim 5, characterized in that the pick-up device (13) comprises a hinged arm mechanism with a gripper (17), movably arranged along the conveyor track portion (5) located in the lane (1), the hinged arm (13) being controllable so as to be brought above any place in the whole lane area (1) belonging to the relevant pick-up device (13), and the gripper (17) being arranged to pick up one crate or a stack of crates (9).

8. A handling equipment according to any of claims 5-7, characterized in that the conveyor track system (4,5,6,7) is provided with a main conveyor track (4) with a supply side (10) and a number of side conveyor tracks (5,6,7), extending in the lanes (1,2,3), connected with the main conveyor track (4) via conveyor track branches.

## Patentansprüche

1. Verfahren zur Produktionssteuerung und zum automatischen Handhaben täglich frischer Eßwaren, wie Brotlaibe, wobei zur Bildung von Kundengruppen, die, entsprechend der Bestellung eines Kunden, eine Anzahl von Einheiten (9) wie Kisten, Schachteln oder Standardcontainer mit unterschiedlichen Nahrungsmitteltypen umfasssen, eine Anzahl von Einheiten (9) eines Nahrungsmitteltyps in einer Produktionsgruppe, deren Anzahl von Einheiten (9) der von verschiedenen Kunden bestellten Anzahl der Einheiten (9) dieses Nahrungsmitteltyps entspricht, in einem Produktionsschritt erzeugt wird, wobei jede Produktionsgruppe eines bestimmten Nahrungsmitteltyps in einem Zuführschritt einer Fördereinrichtung (4, 5, 6, 7, 12, 13) zugeführt wird, wobei die Einheiten (9) einer Produktionsgruppe in einem Verteilungsschritt durch die Fördereinrichtung (4, 5, 6, 7, 12, 13) an verschiedene Kundenstellen (8) verteilt werden, und wobei der Produktionsschritt, der Zuführschritt und der Verteilungsschritt für jeden der verschiedenen Nahrungsmitteltypen wiederholt wird, bis sämtliche Nahrungsmitteltypen an die verschiedenen Kundengruppen verteilt sind.

2. Verfahren nach Anspruch 1, dadurch gekennzeichnet, daß die Fördereinrichtung (4, 5, 6, 7, 12, 13), wenn alle Kundengruppen entsprechend den Bestellungen der Kunden im wesentlichen die erforderliche Anzahl sämtlicher Nahrungsmitteltypen enthalten, die gebildeten Kundengruppen in der Reihenfolge, in der sie an die Kunden auszuliefern sind, aufnimmt und sie auf Rollwagen oder ähnliche Rolleinrichtungen plaziert, welche in eine Transporteinrichtung verbracht werden.

3. Verfahren nach Anspruch 1 oder 2, dadurch gekennzeichnet, daß, wenn die Anzahl der Einheiten (9) einer Produktionsgruppe eines bestimmten Nahrungsmitteltyps zu gering ist, um sämtliche Kundengruppen mit der von den betreffenden Kunden bestellten Anzahl von Nahrungsmitteleinheiten dieses Typs zu versorgen, dieser Fehlbestand an Einheiten (9) auf die verschiedenen Kundengruppen verteilt wird.

4. Verfahren nach Anspruch 3, dadurch gekennzeichnet, daß der Fehlbestand an Einheiten (9) insbesondere auf diejenigen Kundengruppen verteilt wird, welche die größte Anzahl des nicht ausreichend vorhandenen Nahrungsmitteltyps enthalten sollen.

5. Handhabungsvorrichtung zum automatischen Handhaben von Einheiten täglich frischer Nahrungsmittel, wie Brotlaibe, die in Kisten, Schachteln oder Standardcontainern (9) verpacht sind, mit
- einem Förderbahnsystem (4, 5, 6, 7), wie einem Band- oder Rollenfördersystem,
- wenigstens einer auf der Zuführseite (10) vorgesehenen Reihe (1, 2, 3) mit Kundenstellen (8), wobei jede Kundenstelle (8) eine Anzahl von Quadratmetern umfaßt, die für eine Kundengruppe eines Kunden reserviert sind,
- wenigstens einer Aufnahmevorrichtung (12, 13), die sich in eine Reihe (1; 2; 3) hinein erstreckt, und
- einer Steuervorrichtung zum Steuern der Förderbahn und der Aufnahmevorrichtung,
zur Ausführung des Verfahrens nach einem der Ansprüche 1-4,
- wobei sich das Förderbandsystem (5, 6, 7) wenigstens teilweise in die oder jede Reihe (1, 2, 3) hinein erstreckt, die mit den Kundenstellen (8) zum Lagern von nach der Kundenbestellung sortierten Kistenstapeln versehen ist/sind,
- wobei die oder jede Aufnahmevorrichtung (12, 13) zum Aufnehmen einer Kiste oder eines Kistenstapels (9) von dem Förderbandsystem (5, 6, 7) und zum Bilden von Kistenstapeln (9) an den Kundenstellen (8), und umgekehrt, ausgebildet ist,
- wobei die Steuervorrichtung zum Verteilen der auf der Zuführseite (10) zuzuführenden Kisten (9) an die verschiedenen Kundenstellen (8) angeordnet ist.

6. Handhabungsvorrichtung nach Anspruch 5, dadurch gekennzeichnet, daß die Aufnahmevorrichtung (12) eine Portalkonstruktion (14) mit einer Laufkatze (15) aufweist, wobei die Laufkatze (15) derart steuerbar ist, daß sie über jede Stelle in der gesamten Reihenfläche (1, 2, 3) gebracht werden kann, die der jeweiligen Aufnahmevorrichtung (12) zugeordnet ist, und wobei die Laufkatze (15) mit auf und ab bewegbaren Greifarmen (16) versehen ist, die zum Aufnehmen einer Kiste oder eines Kistenstapels (9) ausgebildet sind.

7. Handhabungsvorrichtung nach Anspruch 5, dadurch gekennzeichnet, daß die Aufnahmevorrichtung (13) einen Gelenkarmmechanismus mit einem Greifer (17) aufweist, der entlang dem Förderbahnbereich (5) in der Reihe (1) bewegbar ist, wobei der Gelenkarm (13) derart steuerbar ist, daß er über jede Stelle in der gesamten Reihenfläche (1) gebracht werden kann, die der jeweiligen Aufnahmevorrichtung (13) zugeordnet ist, und wobei der Greifer (17) zum Aufnehmen einer Kiste oder eines Kistenstapels (9) ausgebildet ist.

8. Handhabungsvorrichtung nach einem der Ansprüche 5-7, dadurch gekennzeichnet, daß das Förderbahnsystem (4, 5, 6, 7) mit einer Hauptförderbahn (4) mit einer Zuführseite (10) und einer Anzahl von sich in die Reihen (1, 2, 3) hinein erstreckenden Nebenförderbahnen (5, 6, 7), welche über Förderbahnverzweigungen mit der Hauptförderbahn (4) verbunden sind, versehen ist.

## Revendications

1. Procédé de commande de production et de manutention automatique de produits alimentaires frais du jour, tels que des miches de pain, dans lequel, pour la formation de groupes des clients qui, suivant la commande d'un client, contiennent un certain nombre d'unités (9), tels que des claies, des boîtes ou des récipients normalisés de différents types d'aliments, un certain nombre d'unités (9) d'un type d'aliment d'un groupe de production est produit dans une étape de production, le nombre d'unités (9) du groupe de production correspondant à la somme de nombre d'unités (9) de ce type d'aliment commandées par des clients différents, chaque groupe de production d'un type particulier d'aliment étant transmis dans une étape d'alimentation à un transporteur (4, 5, 6, 7, 12, 13), les unités (9) d'un groupe de production étant distribuées dans une étape de distribution par le transporteur (4, 5, 6, 7, 12, 13) à des clients différents occupant des positions correspondantes de clients (8), et l'étape de production, l'étape de transmission et l'étape de distribution étant répétées pour chaque type différent d'aliment jusqu'à ce que tous les types d'aliments aient été distribués aux groupes différents de clients.

2. Procédé selon la revendication 1, caractérisé en ce que, lorsque tous les groupes des clients, en fonction des commandes des clients, contiennent pratiquement les nombres nécessaires de tous les types d'aliments, le transporteur (4, 5, 6, 7, 12, 13) prélève les groupes des clients formés dans l'ordre dans lequel ils doivent être livrés aux clients et les place sur des chariots ou organes analogues qui sont introduits dans un moyen de transport.

3. Procédé selon la revendication 1 ou 2, caractérisé en ce que, lorsque le nombre d'unités (9) d'un groupe de production d'un type particulier d'aliment est trop petit pour la distribution à tous les types de groupes des clients du nombre d'unités de produits alimentaires de ce type commandés par les clients correspondants, le défaut d'unité (9) est réparti dans les différents groupes des clients.

4. Procédé selon la revendication 3, caractérisé en ce que le manque d'unités (9) est réparti en particulier dans les groupes des clients qui doivent contenir le plus grand nombre du type d'aliment qui est en quantité insuffisante.

5. Appareillage de manutention automatique d'unités de produits alimentaires frais du jour, tels que des miches de pain conditionnées en unités telles que des claies, des boîtes ou des récipients normalisés (9), comprenant un système à chemins transporteurs (4, 5, 6, 7), tel qu'un transporteur à courroie ou un système transporteur à rouleaux, placé du côté d'alimentation (10) d'au moins une voie (1, 2, 3) comprenant les positions de clients (8), chaque position de client (8) comprenant un certain nombre de mètres carrés de surface de plancher réservés aux groupes des clients pour un client, au moins un dispositif capteur (12, 13) disposé dans une voie (1, 2, 3) et un dispositif de commande destiné à commander la voie du transporteur et le dispositif capteur pour la mise en oeuvre du procédé selon l'une des revendications 1 à 4, le système (5, 6, 7) à voies de transporteur étant disposé au moins partiellement dans la voie ou chaque voie (1, 2, 3) ayant les positions de clients (8) pour le stockage de piles de claies assorties à la commande du client, le dispositif ou chaque dispositif capteur (12, 13) étant destiné à détecter une claie ou une pile de claies (9) provenant du système à voies de transporteur (5, 6, 7) et à former des piles de claies (9) aux positions (8) de clients et inversement, le dispositif de commande étant destiné à distribuer les claies (9) qui doivent être transmises du côté d'alimentation (10) aux différentes positions de clients (8).

6. Appareillage de manutention selon la revendication 5, caractérisé en ce que le dispositif capteur (12) a une construction (14) en forme de portique ayant un treuil (15), le treuil (15) pouvant être commandé afin qu'il soit placé au-dessus d'un emplacement quelconque de l'ensemble de la surface d'une voie (1, 2, 3) appartenant au dispositif capteur correspondant (12), le treuil (15) ayant des bras de saisie (16) mobiles verticalement et destinés à détecter une claie ou une pile de claies (9).

7. Appareillage de manutention selon la revendication 5, caractérisé en ce que le dispositif capteur (13) comprend un mécanisme à bras articulé ayant un organe (17) de saisie disposé afin qu'il soit mobile le long de la partie (5) de chemin de transport placée dans la voie (1), le bras articulé (13) pouvant être commandé afin qu'il soit mis au-dessus d'un emplacement quelconque de toute la surface de la voie (1) appartenant au dispositif capteur correspondant (13), l'organe de saisie (17) étant destiné à détecter une claie ou une pile de claies (9).

8. Appareillage de manutention selon l'une quelconque des revendications 5 à 7, caractérisé en ce que le système à chemin transporteur (4, 5, 6, 7) a un chemin principal de transport (4) ayant un côté d'alimentation (10) et un certain nombre de chemins transporteurs latéraux (5, 6, 7) pénétrant dans les voies (1, 2, 3) et raccordés au chemin transporteur principal (4) par l'intermédiaire de chemins transporteurs de branchement.
